(19) Europäisches Patentamt
European Patent Office
Office européen des brevets

(11) **EP 1 527 322 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **03792122.8**

(22) Anmeldetag: **07.07.2003**

(51) Int Cl.:
***G01C 21/36*** *(2006.01)*

(86) Internationale Anmeldenummer:
**PCT/DE2003/002271**

(87) Internationale Veröffentlichungsnummer:
**WO 2004/018970 (04.03.2004 Gazette 2004/10)**

(54) **VERFAHREN UND VORRICHTUNG ZUR ANZEIGE VON NAVIGATIONSINFORMATIONEN FÜR EIN FAHRZEUG**

METHOD AND DEVICE FOR DISPLAYING NAVIGATIONAL INFORMATION FOR A VEHICLE

PROCEDE ET DISPOSITIF POUR AFFICHER DES INFORMATIONS DE NAVIGATION POUR UN VEHICULE

(84) Benannte Vertragsstaaten:
**DE FR GB IT**

(30) Priorität: **07.08.2002 DE 10236221**

(43) Veröffentlichungstag der Anmeldung:
**04.05.2005 Patentblatt 2005/18**

(73) Patentinhaber: **SIEMENS AKTIENGESELLSCHAFT**
**80506 München (DE)**

(72) Erfinder:
• **HÖRTNER, Horst**
**4115 Kleinzell (AT)**
• **POMBERGER, Gustav**
**A-4040 Linz (AT)**
• **WIEGHARDT, Jan**
**81476 München (DE)**

• **KOLB, Dieter**
**82110 Germering (DE)**

(56) Entgegenhaltungen:
**US-A1- 2002 055 808     US-B1- 6 411 896**

• **PATENT ABSTRACTS OF JAPAN vol. 2000, no. 22, 9. März 2001 (2001-03-09) & JP 2001 141495 A (MATSUSHITA ELECTRIC IND CO LTD), 25. Mai 2001 (2001-05-25)**
• **PATENT ABSTRACTS OF JAPAN vol. 2000, no. 13, 5. Februar 2001 (2001-02-05) & JP 2000 275057 A (DENSO CORP), 6. Oktober 2000 (2000-10-06)**
• **PATENT ABSTRACTS OF JAPAN vol. 1997, no. 09, 30. September 1997 (1997-09-30) & JP 09 113301 A (DENSO CORP), 2. Mai 1997 (1997-05-02)**

**Beschreibung**

Die Erfindung betrifft ein Verfahren und eine Vorrichtung, bei dem/der Navigationsinformationen für ein Fahrzeug mit einem Bild der Fahrzeugumgebung überlagert werden, wobei diese bildliche Darstellung einer Navigations-Darstellung mittels einer perspektivischen Transformation transformiert wird.

Ein solches Verfahren bzw. eine solche Vorrichtung ist aus der europäischen Patentanmeldung EP 0 406 946 A1 bekannt.

Darüber hinaus gibt es heutige Navigationssysteme, die dem Fahrer im Kreuzungsbereich den empfohlenen Weg mittels Piktogrammen anzeigen und einen akustischen Hinweis, z.B. "2. Straße nach rechts abbiegen" oder "im Kreisel geradeaus fahren", abgeben. Manche Systeme zeigen auch zusätzlich den empfohlenen Weg in einer Landkarte an.

Aus den Patentabstracts of Japan zur japanischen Patentanmeldung JP 09113301 ist eine Navigationseinrichtung bekannt, bei der ein virtuelles Fahrzeug derart auf der Windschutzscheibe eines Fahrzeuges eingeblendet wird, dass in einer ersten Entfernung zu einem Abbiegepunkt in einer Route zum Zielort am virtuellen Fahrzeug ein Fahrtrichtungsanzeiger gesetzt wird und wenn eine zweite nähere Entfernung zum Abbiegepunkt erreicht wird das virtuelle Fahrzeug in die entsprechende Abbiegerichtung gelenkt wird.

Ferner ist aus der US-Patentanmeldung US 2002/0055808 A1 ein Display System für ein Fahrzeug bekannt, bei dem ein voraus fahrendes virtuelles Fahrzeug auf die Windschutzscheibe projiziert wird, wobei Reisebedingungen des virtuellen Fahrzeugs auf der Basis von Straßenbedingungen und Reisebedingungen für das reale Fahrzeug ermittelt werden.

Schließlich ist aus der US-Patentschrift US 6,411,896 B1 ein Verfahren und ein System zur Darstellung von Warnhinweisen für Fahrzeugführer bekannt, bei dem Informationen aus einer geografischen Datenbasis entnommen und angezeigt werden.

Unter Fahrzeug werden im Folgenden nicht nur Landfahrzeug, sondern auch Wasserfahrzeuge und Flugzeuge verstanden.

Die der Erfindung zu Grunde liegende Aufgabe besteht nun darin, ein Verfahren und eine Vorrichtung zur Anzeige von Navigationsinformationen für ein Fahrzeug derart anzugeben, dass einem Fahrzeuglenker auf intuitiv leicht verständliche Weise der Weg zu einem bestimmten Ziel durch den Straßenverkehr gewiesen wird.

Diese Aufgabe wird hinsichtlich des Verfahrens durch die Merkmale des Patentanspruchs 1 und hinsichtlich der Anordnung durch die Merkmale des Patentanspruchs 5 erfindungsgemäß gelöst.

Die weiteren Ansprüche betreffen bevorzugte Ausgestaltungen des erfindungsgemäßen Verfahrens.

Die Erfindung wird nachfolgend anhand von in den Zeichnungen dargestellten Ausführungsbeispielen erläutert. Dabei zeigen die

Figuren 1, 2, 3a, 3b    und 4: Darstellungsarten von Navigationsinformationen mit Hilfe eines virtuellen Lotsenfahrzeugs und

Figuren 5a und 5b:    Darstellung zur Erläuterung der Positionierung des virtuellen Lotsenfahrzeugs,

Die Erfindung besteht im wesentlich darin, dass Navigationsinformationen für ein Fahrzeug in Form eines virtuellen Lotsenfahrzeugs intuitiv und leicht verständlich mit einem Bild der Fahrzeugumgebung überlagert angezeigt werden.

In einer Ausführungsbeispiel der Erfindung werden die Navigationsinformationen mit Hilfe eines virtuellen Lotsen in Form eines stilisierten Fahrzeugs dargestellt, das scheinbar vor dem Fahrer auf der empfohlenen Route herfährt. Durch seine virtuellen Fahrmanöver macht das virtuelle Lotsenfahrzeug den Fahrer auf bevorstehende reale Fahrmanöver aufmerksam.

Durch sein Verhalten kann das virtuelle Lotsenfahrzeug dem Fahrer Routenempfehlungen oder andere Verhaltensempfehlungen intuitiv und leicht verständlich anzeigen. So wird bspw.

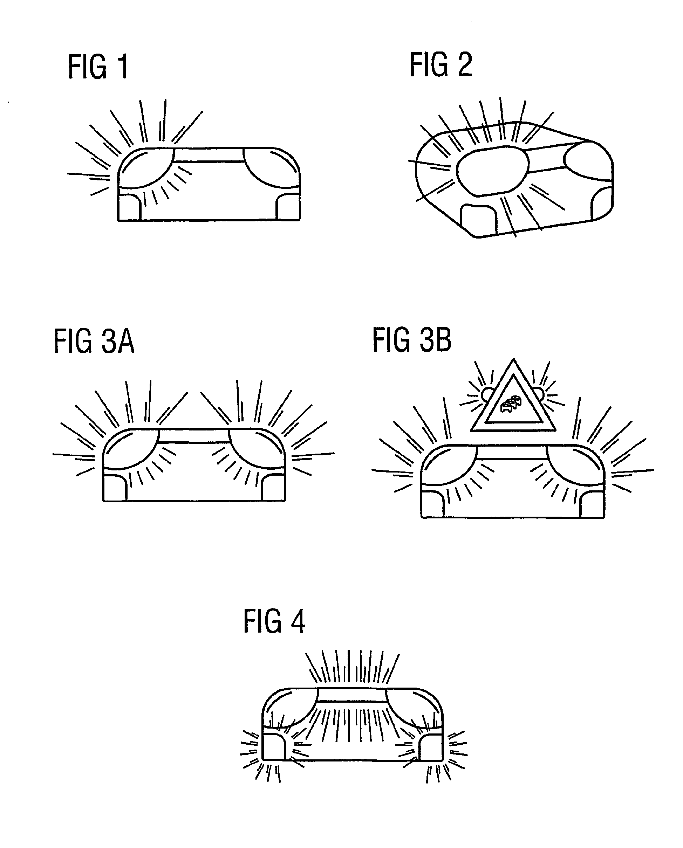

1. eine Empfehlung "nach rechts abbiegen" oder "nach links abbiegen", wie in Figur 1 gezeigt, durch ein virtuelles Lotsenfahrzeug mit einem entsprechend blinkendem Richtungsanzeiger dargestellt;

2. eine Empfehlung "nach links in eine bestimmte Straße einbiegen" oder "nach rechts in eine bestimmte Straße einbiegen", wie in Figur 2 gezeigt, durch entsprechend einbiegendes virtuelles Lotsenfahrzeug dargestellt;

3. eine Empfehlung "vorsichtig fahren wegen einer Gefahrenquelle", bspw. Stau, Baustelle, Geisterfahrer o. ä., auf den Fahrer zukommend, wie in Figur 3a dargestellt, durch ein virtuelles Lotsenfahrzeug mit eingeschalteter Warnblinkanlage dargestellt. Zusätzlich kann optional, wie in Figur 3b gezeigt, über Text oder Piktogramm weitere Information auf einer Tafel an dem virtuellen Lotsenfahrzeug angezeigt werden;

4. eine Empfehlung "Geschwindigkeit reduzieren, wie in Figur 4 dargestellt, dadurch angezeigt, dass die Bremslichter des virtuellen Lotsenfahrzeugs aufleuchten, wenn der Fahrer zu schnell fährt, z.B. aufgrund einer bestehenden Geschwindigkeitsbeschränkung oder angesichts einer kommenden engen Kurve;

5. eine Empfehlung "Mindestabstand zum vorausfahrenden Fahrzeug, entsprechend der aktuellen Geschwindigkeit, einhalten", dadurch angezeigt, dass ein virtuelles Lotsenfahrzeug so auf der Straße platziert wird, dass es scheinbar genau im aktuell erforderlichen Mindestabstand vor dem Fahrer herfährt. Befindet sich nun ein reales Fahrzeug zwischen dem Fahrer und dem virtuellen Fahrzeug, so ist der Fahrer zu dicht auf das reale vorausfahrende Fahrzeug aufgefahren.

Dabei wird das virtuelle Lotsenfahrzeug in ein Videobild der realen Szene vor dem Fahrzeug des Fahrers eingebettet und auf einem Display angezeigt oder vor dem Fahrer in die Frontscheibe seines Fahrzeugs projiziert.

Da sich das virtuelle Lotsenfahrzeug im Grunde wie ein reales den Fahrer führendes Fahrzeug verhält sind die Empfehlungen und Anweisungen, die der virtuelle Lotse visualisiert, für den Fahrer intuitiv verständlich.

Das Lotsenfahrzeug fährt scheinbar in einer gewissen Entfernung, dem Lotsenabstand d, vor dem eigentlichen Fahrzeug her. Diese Entfernung ist abhängig von der aktuellen Geschwindigkeit des Fahrzeug und gegebenenfalls von der an der aktuellen Stelle zulässigen oder empfohlenen Höchstgeschwindigkeit.

Dieser Lotsenabstand wird bspw. folgendermaßen ermittelt: Gegeben seien die Fahrzeuggeschwindigkeit $v$ und eventuell eine Höchstgeschwindigkeit $v_0$.

Gesucht ist der virtuelle Lotsenabstand $d$.

Ist keine Höchstgeschwindigkeit gegeben oder ist $v<v_0$, so ist $d(v) = \max\left(5\mathrm{m}, \dfrac{v*36}{20}\mathrm{s}\right).$

Ist $v>v_0$, wird dem Fahrer empfohlen, die Geschwindigkeit zu reduzieren. Dies wird signalisiert durch ein Verkürzen des Abstandes, d.h.

$$d(v) = \max\left(5\mathrm{m}, \frac{v_0*36}{20}\mathrm{s} - \frac{c*(v-v_0)*36}{20}\mathrm{s}\right).$$

Die Größe c kann hierbei fest, z. B. c=2, gewählt werden oder als Funktion des Straßentyps begriffen werden, z.B. c=2 im Stadtverkehr, c=5 auf Landstraßen, c=6 auf Autobahnen. Ferner wird in einer Ausführungsbeispiel der Erfindung die Lotsenposition in Weltkoordinaten wie folgt bestimmt:

Gegeben seien die Fahrzeugposition $\vec{P}$ in Weltkoordinaten, z.B. gemessen über GPS, die Information über die durch das Navigationssystem empfohlene Route in Form von $n$ Stützpunkten $\vec{R}_i$ und die Wegstrecke $d$, die der Lotse vor dem Fahrzeug auf der empfohlenen Route "herfährt".

Gesucht ist die Lotsenposition $\vec{L}$ in Weltkoordinaten und die Lotsenorientierung $\vec{O}$ in Weltkoordinaten, wobei $\vec{O}$ den Einheitsvektor in Blickrichtung des virtuellen Lotsenfahrzeugs bildet.

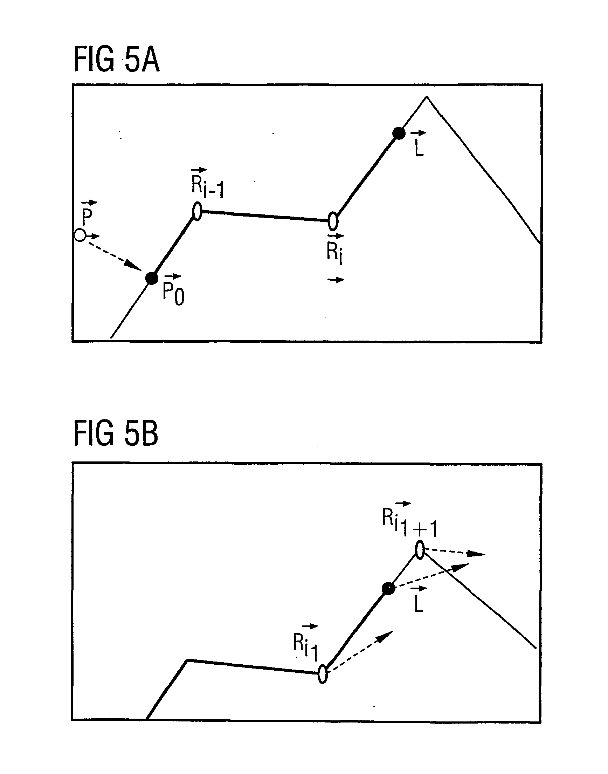

Um die Lotsenposition auf der Route zu bestimmen, muss zunächst die Position des Fahrzeugs auf der Route bestimmt werden. Dazu wird, wie in Figur 5a und 5b dargestellt, die gemessene Position $\vec{P}$ des Fahrzeugs auf die Route projiziert.

Ein Weg dies zu leisten, ist den Punkt $\vec{P}_0 = (1 - t_0)\vec{R}_{i_0} + t_0\vec{R}_{i_0}+1$ auf der Route zu suchen, der den minimalen Abstand im Sinne kleinster Quadrate zu $\vec{P}$ hat, d.h. $f(t,i) = |\vec{P} - ((1-t)\vec{R}_i + t\,\overline{R}_{i+1})|^2$ mit $t \in [0,1[$ und $i \in \{1,...,n\}$ hat ein absolutes Minimum an der Stelle $t = t_0$ und $i = i_0$. Die Lotsenposition $\vec{L}$ ist dann gegeben durch $\vec{L} = (1-t_1)\vec{R}_{i_1} + t_1\vec{R}_{i_1}+1$,

wobei $t_1$ und $i_1$ bestimmt sind durch $d(v) = \left|\vec{L} - \vec{R}_{i_i}\right| + \left|\vec{P}_0 - \vec{R}_{i_0+1}\right| + \sum_{i=i_0+1}^{i_i-1}\left|\vec{R}_{i+1} - \vec{R}_i\right|.$

Die Lotsenorientierung ist nun gegeben durch

$$\vec{O} = \frac{1}{N}\left( \frac{(1-t_1)}{\left|\vec{R}_{i_1+1} - \vec{R}_{i_1-1}\right|}(\vec{R}_{i_1+1} - \vec{R}_{i_1-1}) + \frac{t_1}{\left|\vec{R}_{i_1+2} - \vec{R}_{i_1}\right|}(\vec{R}_{i_1+2} - \vec{R}_{i_1})\right)$$

mit

$$N = \left|\frac{(1-t_1)}{\left|\vec{R}_{i_1+1} - \vec{R}_{i_1-1}\right|}(\vec{R}_{i_1+1} - \vec{R}_{i_1-1}) + \frac{t_1}{\left|\vec{R}_{i_1+2} - \vec{R}_{i_1}\right|}(\vec{R}_{i_1+2} - \vec{R}_{i_1})\right|$$

Aus der Lotsenposition und der Lotsenorientierung wird nun durch eine perspektivische Transformation eine 2-dimensionalen Lotsendarstellung zur Überlagerung mit dem Videobild bzw. zur Projektion in die Windschutzscheibe ermittelt:

Fall 1: Überlagerung mit einem Videobild

Gegeben seien die Lotsenposition $\vec{L}$, die Lotsenorientierung $\vec{O}$, die Parameter der realen Kamera und eine 3-dimensionale Beschreibung des Lotsenmodells.
Gesucht ist die 2-dimensionale Lotsendarstellung.
Aus $\vec{L}$ und $\vec{O}$ kann die Lage des Lotsenmodells in Weltkoordinaten berechnet werden. Aus den Parametern einer Kamera zur Aufzeichnung der Fahrzeugumgebung werden die Projektionsabbildungen errechnet und die Modellbeschreibung des Lotsenfahrzeugs wird in die darstellende Ebene projiziert.
Das System ist hierbei mit einer Kamera ausgestattet, die das Geschehen vor dem Fahrzeug aufnimmt. In die einzelnen Videobilder wird entsprechend der errechneten Fahrtroute das virtuelle Lotsenfahrzeug eingebettet. Das so erhaltene Augmented Reality-Bild wird auf einem Display im Sichtbereich des Fahrers angezeigt. (Anhang, Photo 6a)
Zusätzlich wird bspw. die empfohlene Fahrtroute angezeigt. Durch die Fahrtroute wird auch der weitere Weg des virtuellen Fahrzeugs visualisiert. ( Anhang, Photo 6b)

Fall 2: Projektion in die Windschutzscheibe

Gegeben seien die Lotsenposition $\vec{L}$, die Lotsenorientierung $\vec{O}$, die über Sensoren ermittelte Position und Blickrichtung der Augen des Fahrers und eine 3-dimensionalen Beschreibung des Lotsenmodells.
Gesucht ist die 2-dimensionale Lotsendarstellung.
Aus $\vec{L}$ und $\vec{O}$ kann die Lage des Lotsenmodells in Weltkoordinaten berechnet werden. Aus den Parametern der Augenposition und -blickrichtung werden die Projektionsabbildungen errechnet und die Modellbeschreibung des Lotsenfahrzeugs wird in die darstellende Ebene projiziert.
Hierbei wird bspw. zunächst über ein Trackingsystem die Augenposition des Fahrers ermittelt. Über eine Projektionseinrichtung wird entsprechend der errechneten Fahrtroute das virtuelle Fahrzeug an die entsprechende Stelle auf der Frontscheibe projiziert. (Anhang, Photo 6c)
Zusätzlich wird bspw. die empfohlene Fahrtroute in die Frontscheibe projiziert. (Anhang, Photo 6d)

Photo 6b

Photo 6d

Photo 6a

Photo 6c

**Patentansprüche**

1.  Verfahren zur Anzeige von Navigationsinformationen für ein Fahrzeug,

bei dem die Navigationsinformationen für ein Fahrzeug in Form eines virtuellen Lotsenfahrzeugs mit einem Bild der Fahrzeugumgebung überlagert angezeigt werden und

bei dem eine Position, eine Orientierung und eine Größe des angezeigten virtuellen Lotsenfahrzeug in Abhängigkeit einer aktuellen Fahrgeschwindigkeit des Fahrzeugs, Stützpunkten für eine empfohlene Route, einer Position und Orientierung des Fahrzeugs, einer Position und Orientierung einer Kamera zur Erfassung der Fahrzeugumgebung und einer Augenposition und einer Blickrichtung des Fahrers erfolgen, und

bei dem eine Routen- oder Verhaltensempfehlung "Mindestabstand zum vorausfahrenden Fahrzeug, entsprechend der aktuellen Fahrgeschwindigkeit, einhalten", **dadurch** angezeigt wird, dass ein virtuelles Lotsenfahrzeug so auf der Darstellung der Straße platziert wird, dass es scheinbar genau im aktuell erforderlichen Mindestabstand vor dem Fahrer herfährt, wobei ein zu dichtes Auffahren **dadurch** angezeigt wird, dass sich im Bild ein reales Fahrzeug zwischen dem Fahrer und dem virtuellen Fahrzeug befindet.

**2.** Verfahren nach Anspruch 1,
bei dem eine Lotsenposition (L) und eine Lotsenorientierung (O) in Abhängigkeit von Stützpunkten (R) für eine empfohlene Route sowie in Abhängigkeit der aktuellen Position (P) und Fahrgeschwindigkeit des Fahrzeugs ermittelt wird.

**3.** Verfahren nach Anspruch 1 oder 2,
bei dem entsprechend der Lotsenposition und der Lotsenorientierung ein Modell des Lotsenfahrzeugs im dreidimensionalen Raum gebildet wird und
bei dem aus diesem Modell eine zweidimensionale Darstellung errechnet wird, die mit dem vom Fahrer wahrgenommenen Bild der Fahrzeugumgebung überlagert wird.

**4.** Verfahren nach einem der vorhergehenden Ansprüche,
bei dem zusätzlich über Text oder Piktogramm weitere Information auf einer Tafel an dem virtuellen Lotsenfahrzeug angezeigt werden.

**5.** Vorrichtung zur Anzeige von Navigationsinformationen für ein Fahrzeug,
bei der eine Einrichtung zur Überlagerung von Navigationsinformationen für ein Fahrzeug in Form eines virtuellen Lotsenfahrzeugs mit einem Bild der Fahrzeugumgebung derart vorhanden ist, dass eine Position, eine Orientierung und eine Größe des virtuellen Lotsenfahrzeug in Abhängigkeit einer aktuellen Fahrgeschwindigkeit des Fahrzeugs, Stützpunkten für eine empfohlene Route, einer Position des Fahrzeugs, einer Orientierung des Fahrzeugs, einer Position der Kamera zur Erfassung der Fahrzeugumgebung und einer Orientierung der Kamera zur Erfassung der Fahrzeugumgebung erfolgen und

bei der eine Routen- oder Verhaltensempfehlung "Mindestabstand zum vorausfahrenden Fahrzeug, entsprechend der aktuellen Fahrgeschwindigkeit, einhalten", **dadurch** anzeigbar ist, dass ein virtuelles Lotsenfahrzeug so auf der Darstellung der Straße platziert wird, dass es scheinbar genau im aktuell erforderlichen Mindestabstand vor dem Fahrer herfährt, wobei ein zu dichtes Auffahren **dadurch** angezeigt wird, dass sich im Bild ein reales Fahrzeug zwischen dem Fahrer und dem virtuellen Fahrzeug befindet.

**Claims**

**1.** Method for displaying navigational information for a vehicle, wherein the navigational information for a vehicle is displayed in the form of a virtual pilot vehicle superimposed on an image of the vehicle environment and wherein a position, an orientation and a size of the displayed virtual pilot vehicle are determined by a current speed of the vehicle, reference points for a recommended route, a position and orientation of the vehicle, a position and orientation of a camera for recording the vehicle environment and an eye position and a line of sight of the driver, and

wherein a route or action recommendation to "keep minimum distance from the vehicle ahead in accordance with the current driving speed" is displayed by means of a virtual pilot vehicle being positioned on the image of the road such that it appears to be proceeding in front of the driver at precisely the minimum distance currently required, while driving too close to the vehicle in front is shown by a real vehicle being located in the image between the driver and the virtual vehicle.

**2.** Method according to claim 1,
wherein a pilot position (L) and a pilot orientation (0) are determined according to reference points (R) for a recommended route and according to the current position (P) and speed of the vehicle.

**3.** Method according to claim 1 or claim 2,
wherein a model of the pilot vehicle in three-dimensional space is created according to the pilot position and pilot orientation and wherein a two-dimensional representation which is superimposed on the image of the vehicle environment perceived by the driver is computed from this model.

**4.** Method according to one of the preceding claims,
wherein further information is additionally displayed via text or pictogram on a panel on the virtual pilot vehicle.

**5.** Device for displaying navigational information for a vehicle,
wherein an apparatus for superimposing navigational information for a vehicle in the form of a virtual pilot vehicle on an image of the vehicle environment exists such that a position, an orientation and a size of the virtual pilot vehicle are determined in accordance with a current speed of the vehicle, reference points for a recommended route, a position of the vehicle, an orientation of the vehicle, a position of the camera for recording the vehicle environment and an orientation of the camera for recording the vehicle environment, and
wherein a route or action recommendation to "keep minimum distance from the vehicle ahead in accordance with the current driving speed" is displayable by means of a virtual pilot vehicle being positioned on the image of the road such that it appears to be proceeding in front of the driver at precisely the minimum distance currently required, while driving too close to the vehicle in front is shown by a real vehicle being located in the image between the driver and the virtual vehicle.

## Revendications

**1.** Procédé pour afficher des informations de navigation pour un véhicule, dans lequel

- les informations de navigation pour un véhicule sont affichées sous la forme d'un véhicule pilote virtuel, une image de l'environnement du véhicule y étant superposée ; et
- une position, une orientation et une taille du véhicule pilote virtuel affiché étant fonction d'une vitesse de déplacement actuelle du véhicule, de points de repère pour un itinéraire recommandé, d'une position et d'une orientation du véhicule, d'une position et d'une orientation d'une caméra pour enregistrer l'environnement du véhicule et d'une position des yeux et d'une direction du regard de conducteur ; et
- une recommandation d'itinéraire ou de conduite « respecter la distance minimale par rapport au véhicule qui précède en conformité avec la vitesse de déplacement actuelle » est affichée par positionnement d'un véhicule pilote virtuel de manière telle sur la représentation de la route que celui-ci semble précéder le conducteur exactement à la distance minimale actuellement requise, un trop grand rapprochement étant affiché du fait que l'image montre un véhicule réel entre le conducteur et le véhicule virtuel.

**2.** Procédé selon la revendication 1, dans lequel une position du pilote (L) et une orientation du pilote (0) sont déterminées en fonction de points de repère (R) pour un itinéraire recommandé ainsi qu'en fonction de la position actuelle (P) et de la vitesse de déplacement du véhicule.

**3.** Procédé selon la revendication 1 ou 2, dans lequel un modèle du véhicule pilote est formé dans l'espace tridimensionnel en conformité avec la position du pilote et à l'orientation du pilote et dans lequel est calculée, à partir de ce modèle, une représentation bidimensionnelle à laquelle se superpose l'image de l'environnement du véhicule perçue par le conducteur.

**4.** Procédé selon l'une des revendications précédentes, dans lequel une information supplémentaire est additionnellement affichée, via un texte ou un pictogramme, sur une plaque sur le véhicule pilote virtuel.

**5.** Dispositif d'affichage d'informations de navigation pour un véhicule automobile, dans lequel un dispositif pour superposer une image de l'environnement du véhicule à des informations de navigation pour un véhicule sous la forme d'un véhicule pilote virtuel existent de manière qu'une position, une orientation et une taille du véhicule pilote virtuel sont fonction d'une vitesse de déplacement actuelle du véhicule, de points de repère pour un itinéraire recommandé, d'une position du véhicule, d'une orientation du véhicule, d'une position de la caméra pour enregistrer l'environnement du véhicule et d'une orientation de la caméra pour enregistrer l'environnement du véhicule, et dans lequel une recommandation d'itinéraire ou de conduite « respecter la distance minimale par rapport au véhicule qui précède en conformité avec la vitesse de déplacement actuelle » peut être affichée par positionnement d'un véhicule pilote virtuel de manière telle sur la représentation de la route que celui-ci semble précéder le conducteur exactement à la distance minimale actuellement requise, un trop grand rapprochement étant affiché du fait que l'image montre un véhicule réel entre le conducteur et le véhicule virtuel.

FIG 1

FIG 2

FIG 3A

FIG 3B

FIG 4

## FIG 5A

## FIG 5B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0406946 A1
- JP 09113301 B
- US 20020055808 A1
- US 6411896 B1